# DEMANDE DE BREVET EUROPEEN

(11) **EP 0 637 178 A1**
(43) Date de publication de la demande: **01.02.1995**
(21) Numéro de dépôt: 94401701.1
(22) Date de dépôt: 25.07.1994
(51) Int. Cl.: H04Q 1/14

(54) **Répartiteur téléphonique**

(30) Priorité: 27.07.1993 FR 9309226
(71) Demandeur: ALCATEL CABLE INTERFACE, F-08330 Vrigne aux Bois (FR)
(72) Inventeur: Lejuste, Maurice, F-08330 Vrigne aux Bois (FR); Stenneler, Jean-Paul, F-45400 Chanteau (FR)
(74) Mandataire: Buffiere, Michelle

(57) **Abrégé**

Le répartiteur téléphonique comporte des profilés porteurs sur lesquels sont montés des blocs de raccordement et des anneaux de guidage des jarretières.

Il est caractérisé en ce qu'il comporte des modules de fixation (10), des anneaux de guidage (3A) sur les profilés considérés verticaux (1), permettant un montage de certains anneaux de guidage (3A) horizontalement et de part et d'autre d'un même profilé, pour leur répartition sur une partie des profilés, et des autres anneaux de guidage verticalement sur tout ou partie des profilés, et en ce que chaque anneau de guidage est pourvu d'un doigt (30) de montage sur le module, avec deux orientations orthogonales possibles.

## Description

La présente invention porte sur un répartiteur téléphonique, comportant une série de profilés porteurs sur lesquels sont montés des équipements de raccordement, dits blocs de raccordement, et des équipements accessoires, tels que des anneaux de guidage de jarretières, en particulier.

Ces blocs de raccordement sont reliés aux lignes de câbles dits d'entrée et de sortie à raccorder, ces câbles ou leurs lignes étant guidés et maintenus contre les profilés jusqu'au niveau sensiblement de chaque bloc de raccordement concerné. Ils se présentent en rangées, en face avant d'un répartiteur monoface, et reçoivent les jarretières en face avant, ces jarretières permettant un brassage des raccordements. Ils laissent entre leurs rangées ou toutes les deux rangées un espace libre dans lequel les anneaux de guidage des jarretières définissent un chemin de guidage, latéralement sur les rangées et en arrière des blocs de raccordements. Ces anneaux de guidage sont entrouverts en regard de la face avant du répartiteur et rendent les jarretières accessibles depuis la face avant.

Ces anneaux de guidage sont d'axe parallèle aux profilés, pour le guidage de jarretières le long des rangées de blocs de raccordement, et peuvent en outre être pour certains d'entre eux d'axe transversal aux profilés pour le guidage supplémentaire de jarretières transversalement aux rangées de blocs de raccordement.

Le document FR-A-2446040 décrit un tel répartiteur téléphonique. Dans ce répartiteur, les anneaux de guidage sont fixés sur des premiers profilés verticaux, à l'aide de pattes de fixation en forme de L. Les blocs de raccordement sont fixés sur des entretoises horizontales en U, elles-mêmes fixées sur les premiers profilés et saillantes à l'avant des anneaux, ou sont fixés sur des deuxièmes profilés verticaux situés à l'avant des premiers et leur étant assemblés par des entretoises horizontales en U. Les anneaux de guidage sont orientés convenablement sur les pattes de fixation pour leur orientation horizontale et verticale sur les premiers profilés verticaux. Les pattes de fixation sont quant à elles de deux longueurs différentes, selon l'orientation des anneaux, pour séparer l'un de l'autre le plan des chemins verticaux et le plan du ou des chemins horizontaux définis par les anneaux horizontaux et les anneaux verticaux.

Le répartiteur peut comporter de manière classique d'autres équipements accessoires, tels que notamment des tablettes support de câbles sur l'une et/ou l'autre des parties terminales des profilés, des marchepieds sur la partie terminale des profilés.

Le document EP-A-0074898 décrit également un répartiteur de ce type, dans lequel les profilés portent l'ensemble des équipements pour l'organisation directe du répartiteur par colonne. Ces profilés présentent des paires d'ailettes sur leurs faces, pour le montage et le maintien des supports de fixation des équipements ou le maintien direct de certains équipements accessoires, tels que marchepieds, tablettes support de câbles, qui s'y prêtent. Les supports de fixation des équipements sont spécifiques à chaque type d'équipement et sont en général des plats en forme de U ou des pattes en équerre et de longueurs différentes. Ils sont eux-mêmes fixés sur les ailettes de la face avant des profilés ou entre les ailettes de leurs faces latérales, à l'aide d'une vis ou d'un jeu de vis traversant l'un de leurs jambages et ancrées dans les ailettes entre elles.

Les opérations de montage des équipements sur les profilés restent relativement longues pour la réalisation du répartiteur selon l'un ou l'autre de ces documents. Elles nécessitent en outre un nombre important de différents supports de fixation des équipements, qui se fixent différemment les uns des autres sur les profilés.

La présente invention a pour but de rationaliser la réalisation des répartiteurs, en minimisant les types de supports de fixation des divers équipements, et en rendant les opérations de montage aisées et rapides.

Elle a pour objet un répartiteur téléphonique, comportant des profilés porteurs, alignés à la suite les uns des autres, des équipements de raccordement, dits blocs de raccordement, reliés à des lignes de câbles d'entrée et de sortie et à des jarretières, et des équipements accessoires, constitués pour au moins une partie d'entre eux par des anneaux de guidage des jarretières, et dans lequel lesdits profilés présentent des ailettes longitudinales de montage des équipements, lesdits blocs de raccordement forment des rangées parallèles aux profilés au moins sur une face avant du répartiteur et laissent au moins un accès latéral le long de chaque rangée, et lesdits anneaux de guidage maintenus sur lesdits profilés par des éléments individuels de fixation sont en regard des accès latéraux définis le long desdites rangées, caractérisé en ce que lesdits éléments de fixation sont des modules identiques et comportent chacun une embase plate, ayant deux faces principales, un embout, saillant sur une première des faces principales de l'embase, un alésage axial, traversant l'embase et l'embout et recevant une vis de serrage dans un écrou terminal associé, bloqué en rotation, et une paire de pattes saillantes sur la deuxième face principale de l'embase, pour le montage du module de fixation entre des ailettes des profilés, et en ce que lesdits anneaux de guidage comportent chacun un doigt latéral , pourvu d'un logement interne complémentaire de l'embout et débouchant sur l'extérieur du doigt d'une part par deux premières ouvertures orthogonales, d'insertion de l'embout dans ledit logement selon deux directions orthogonales, et d'autre part par deux deuxièmes ouvertures opposées auxdites premières ouvertures, de passage de ladite vis pour son serrage dans ledit écrou.

Le répartiteur présente de préférence en outre au moins l'une des caractéristiques additionnelles suivantes:
- ledit embout est de section droite sensiblement carrée et ledit logement de section analogue dans deux plans parallèles auxdites premières ouvertures, respectivement.
- lesdits anneaux de guidage sont identiques, de forme sensiblement rectangulaire et d'épaisseur suffisante pour leur résistance, ledit doigt latéral de chacun étant porté par un premier bord de l'anneau de guidage et étant sensiblement dans le prolongement d'un deuxième bord adjacent audit premier bord, et lesdites ouvertures dudit logement étant dans deux plans parallèles à la face extérieure dudit deuxième bord et dans deux plans parallèles au plan médian de l'anneau de guidage.
- ledit alésage de chaque module de fixation débouche dans un évidemment de la deuxième face principale de l'embase, ledit évidement étant de section sensiblement rectangulaire, supérieure à la section dudit alésage au niveau de la première face principale de ladite embase, et recevant sélectivement la tête de ladite vis, en la laissant libre en rotation, ou ledit écrou, en le bloquant en rotation.
- au moins une partie desdits anneaux de guidage est montée horizontalement relativement aux profilés, dits profilés verticaux, et les anneaux correspondants sont retenus chacun par l'un desdits modules de fixation sur l'une et l'autre des faces latérales d'une seule partie des profilés pour définir deux chemins verticaux de jarretières de part et d'autre de chacun d'eux.
- l'autre partie des anneaux de guidage est montée verticalement sur les profilés et les anneaux de cette autre partie sont retenus par l'un desdits modules de fixation sur l'une des faces latérales et avant de certains d'entre eux, pour définir au moins un chemin horizontal de jarretières.
- ledit embout des modules de fixation présente quatre fentes aux quatre coins de sa section carrée, devant l'embout et le rendant élastiquement déformable, et des chanfreins sur les extrémités de l'embout ainsi divisé.
- lesdits modules de fixation assurent la fixation de potences horizontales sur lesdits profilés et la fixation desdits blocs de raccordement sur le bout des potences et sont associés, à cet effet, chacun à une contre pièce de blocage alésée intérieurement et présentant une forme conique à section carrée extérieurement, s'engageant partiellement en force dans ledit embout, les profilés et les potences étant à section interne évidée et carrée et à section externe reliée à la section interne, en définissant des logements ouverts sur leurs faces périphériques chacun définie par une paire d'ailette longitudinales.

Les caractéristiques et avantages de la présente invention ressortiront de la description faite ci-après, en référence aux dessins ci-annexés. Dans ces dessins:
- les figures 1 et 2 sont deux vues schématiques, en élévation et de côté, d'un répartiteur selon l'invention,
- les figures 3 et 4 sont deux vues frontales opposées, à échelle agrandie, d'un élément dit module de fixation des équipements du répartiteur de la figure 1,
- la figure 5 est une vue en coupe du module de fixation, faite selon la ligne V-V de la figure 4,
- la figure 6 est une vue de côté du module de fixation des figures 3 et 4,
- les figures 7 et 8 sont deux vues en coupe partielle du module de fixation, faite selon la ligne VII de la figure 3, montrant, à échelle agrandie, la partie concernée de ce module non équipée et équipée d'un insert, respectivement,
- la figure 9 est une vue en coupe, à échelle agrandie, selon la ligne IX-IX de la figure 2, montrant la fixation d'une potence sur un profilé porteur du répartiteur et d'un bloc de raccordement sur la potence,
- la figure 10 est une vue frontale d'une contre-pièce utilisée pour les fixations selon les figure 9 du bloc de raccordement, et de la potence,
- la figure 11 est une vue en coupe partielle et éclatée, à échelle agrandie, correspondant à la ligne XI-XI de la figure 1, montrant la fixation d'anneaux de guidage sur un profilé porteur du répartiteur,
- la figure 12 est une vue en coupe, selon la ligne XII-XII de la figure 11, de l'un des anneaux,
- la figure 13 est une vue en coupe à échelle agrandie, selon la ligne XIII-XIII de la figure 12, illustrant deux modes de montage de l'anneau.
- la figure 14 est une vue schématique de dessus d'une variante de constitution du répartiteur, donnée en regard de la figure 11 pour un autre type de profilé.

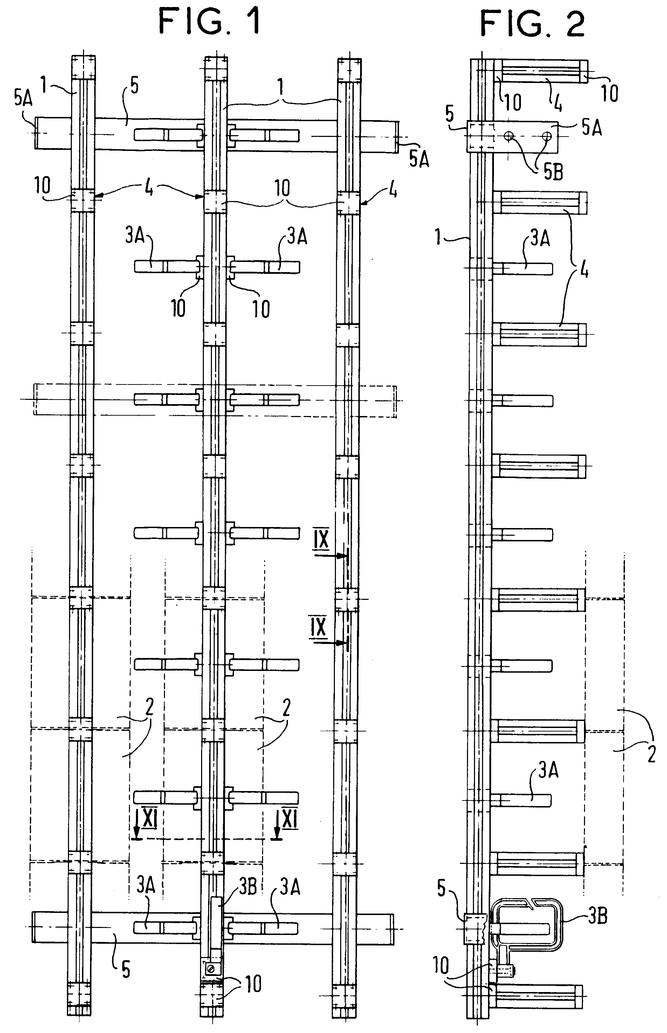

Le répartiteur illustré dans les figures 1 et 2 est monoface. Il peut tout aussi bien, en variante, être double face.

Ce répartiteur comprend une série de profilés porteurs 1, identiques et alignés, sur lesquels sont montés des équipements de raccordement 2, dits blocs de raccordement, et des équipements accessoires constitués essentiellement par des anneaux de guidage 3A et 3B, seuls représentés et affectés au guidage de jarretières. Il est décrit en considérant les profilés 1 verticaux, comme ceci est le cas général, mais ces profilés 1 peuvent tout aussi bien être horizontaux.

Les blocs de raccordement 2 sont fixés en bout de potences horizontales 4, elles-mêmes fixées sur les profilés 1 et appartenant avec ces profilés à la structure porteuse. Ils sont reliés aux lignes d'entrée d'un ou de plusieurs câbles d'entrée, pour certains d'entre eux, et aux lignes de sortie d'un ou de plusieurs câbles de sortie pour les autres, ces câbles ou leurs lignes non représentés étant guidés le long des profilés depuis l'une et/ou l'autre de leurs extrémités où les câbles sont retenus.

Les jarretières, non représentées, sont guidées par les anneaux de guidage 3A parallèlement aux profilés 1, ces anneaux 3A étant horizontaux, et par les anneaux de guidage 3B transversalement aux profilés 1, ces anneaux 3B étant verticaux. Elles sont reliées aux blocs de raccordement 2 en face avant du répartiteur ou des blocs de raccordement sur la structure porteuse, pour les raccordements des lignes d'entrée aux lignes de sortie et le brassage possible de ces raccordements.

Les anneaux de guidage 3A sont le long des profilés 1. Les anneaux de guidage 3B sont à un ou à des niveaux horizontaux définis, en particulier au niveau inférieur du répartiteur.

Les profilés porteurs 1 sont maintenus les uns relativement aux autres par des entretoises horizontales 5 d'assemblage. Ces entretoises sont des plats qui assurent également dans cet exemple de réalisation la fixation du répartiteur. Elles présentent à cet effet leurs portions terminales 5A, coudées à angle droit et saillantes sur l'avant du répartiteur, dans lesquelles sont prévus des trous 5B, pour leur fixation par vis à des parois latérales ou flancs du répartiteur. Elles peuvent également ou en variante être fixées de manière analogue à une paroi arrière ou à un mur. Le répartiteur peut en variante être fixé au sol et relativement au plafond d'un local.

Les profilés 1 sont du type standard utilisé en particulier dans le domaine de la robotique pour la constitution de châssis de machines spéciales d'assemblage. Les potenses 4 sont des tronçons de profilé choisi identique aux profilés 1.

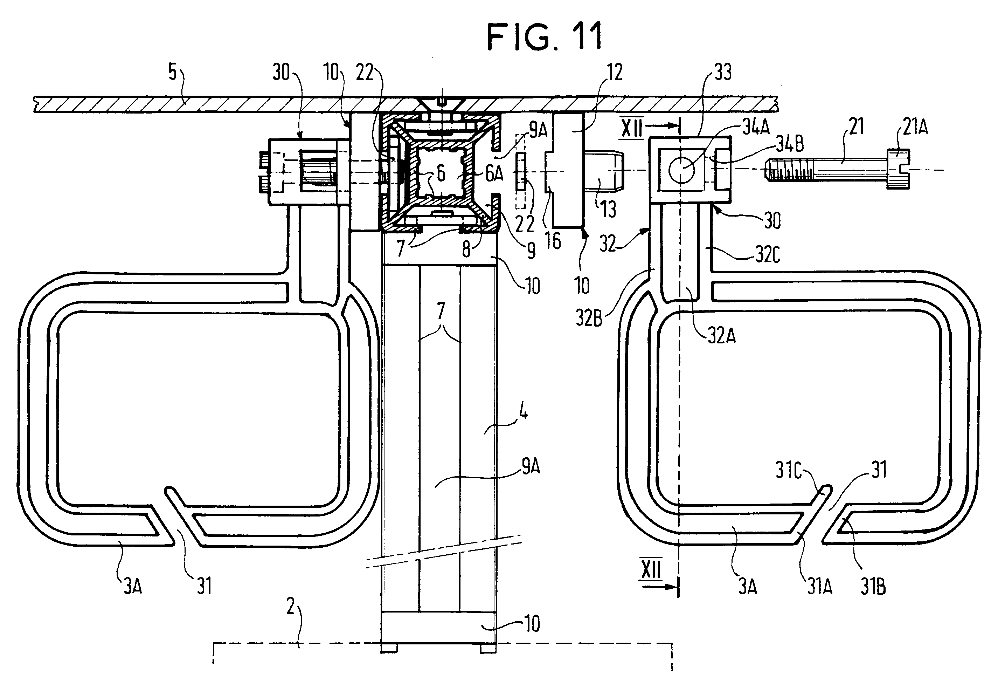

La section des profilés 1 est visible dans la figure 11. Ces profilés 1 sont décrits immédiatement ci-après, en se référant plus particulièrement à cette figure 11.

Ils comportent quatre joues internes 6, définissant entre elles une section interne évidée 6A, sensiblement carrée, quatre paires d'ailettes extérieures 7, définissant entre elles une section externe également sensiblement carrée, dont les côtés sont parallèles aux côtés de la section interne et de longueur sensiblement double, et quatre entretoises 8, reliant les joues internes et les ailettes et s'étendant selon les diagonales des sections interne et externe. Chaque paire d'ailettes, la joue interne en vis-à-vis et les deux entretoises latérales correspondantes délimitent entre elles un logement 9 le long de chaque face du profilé. Chaque logement 9 a une ouverture médiane 9A définie entre les deux ailettes extérieures de chaque face du profilé.

Les potences 4 sont identiques aux profilés, leurs parties étant simplement désignées par les références de celles des profilés.

En se référant à nouveau à la figure 1 ou 2, on voit que des éléments de fixation 10, tous identiques et dits modules de fixation, assurent la fixation des potences 4 et des anneaux de guidage 3A et 3B sur les profilés 1 et celle des blocs de raccordement 2 en bout des potences. On voit aussi que les blocs de raccordement 2 montés sur les profilés forment des rangées parallèles en face avant du répartiteur. Ils laissent un intervalle d'accès entre les rangées, ou en variante toutes les deux rangées. Les anneaux de guidage 3A et 3B montés sur les profilés sont à l'arrière des blocs de raccordement et en regard de ces intervalles d'accès. Ils définissent entre eux les chemins de jarretières, les jarretières étant reliées aux blocs de raccordement sur leur face avant.

Les anneaux de guidage 3A sont horizontaux et définissent un chemin de guidage latéral le long de chaque rangée. Ils sont de préférence regroupés sur certains profilés 1, en définissant deux chemins verticaux de part et d'autre de chaque profilé concerné.

Les anneaux de guidage 3B sont verticaux et définissent de préférence un chemin de guidage inférieur horizontal ou pareillement un chemin de guidage supérieur horizontal. Chaque chemin de guidage horizontal est à l'arrière des blocs de raccordement. Il est rendu décalé relativement aux chemins verticaux directement par le mode de montage des anneaux 3A et 3B concernés sur chacun des modules de fixation.

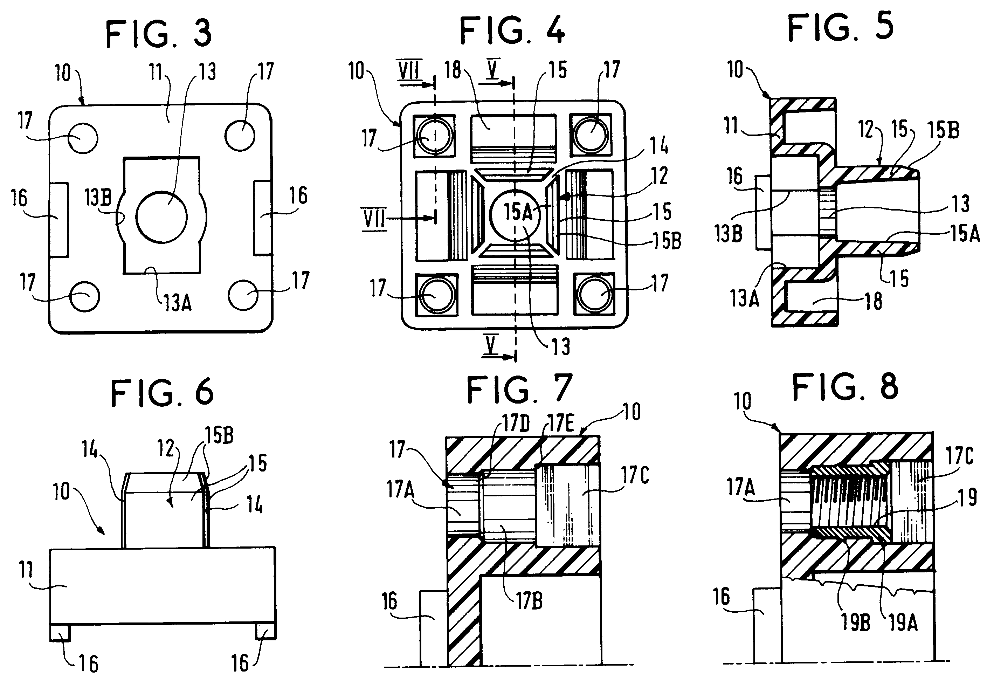

Les modules de fixation 10 sont décrits en regard des figures 3 à 7.

Chacun d'eux comporte une embase 11, relativement plate, dont les faces opposées principales sont sensiblement carrées et sont de côté sensiblement égal au côté de la section externe des profilés, et un embout 12, saillant sur l'une des deux faces principales de l'embase et centrée sur cette face principale. Chacun présente un alésage axial 13 traversant l'embase et l'embout.

L'embout 12 est de section droite sensiblement carrée, qui est tronquée par des fentes 14 le long de ses arêtes. Ces fentes 14 divisent l'embout en quatre ailettes notées 15 et rendues légèrement élastiques. Les faces intérieures 15A des ailettes 15 sont chanfreinées le long des fentes, ainsi que le bord terminal 15B des faces extérieures des ailettes.

Ce module de fixation présente deux pattes opposées de centrage 16, saillantes sur l'autre face principale de l'embase, dite face de centrage. Ces pattes sont centrées sur deux des côtés opposés de la face de centrage. Elles sont droites et chacune de longueur sensiblement égale à la largeur de l'ouverture longitudinale 9A entre les ailettes externes 7 des profilés 1 et des potences 4.

Ce module comporte en outre quatre trous débouchants 17, prévus à proximité des quatre coins de l'embase, et quatre empreintes ou cavités 18, prévues entre les trous 17, sur la face principale portant l'embout.

L'alésage axial 13 est de section carrée le long de l'embout, de section circulaire dans la partie de jonction de l'embout sur l'embase, cette section circulaire s'inscrivant dans la section carrée le long de l'embout. Il débouche ensuite dans une ouverture rectangulaire 13A, de section supérieure, du côté de la face de centrage de l'embase. Deux empreintes en vis-à-vis 13B, semi-circulaires et centrées sur les deux grands bords de cette ouverture 13A définissent entre elles, dans cette ouverture, le logement possible pour une tête de vis.

Les modules de fixation 10 sont relativement rigides, exception faite de l'embout rendu élastique par ses quatre fentes longitudinales. Ils sont de préférence en matière plastique et réalisés par moulage.

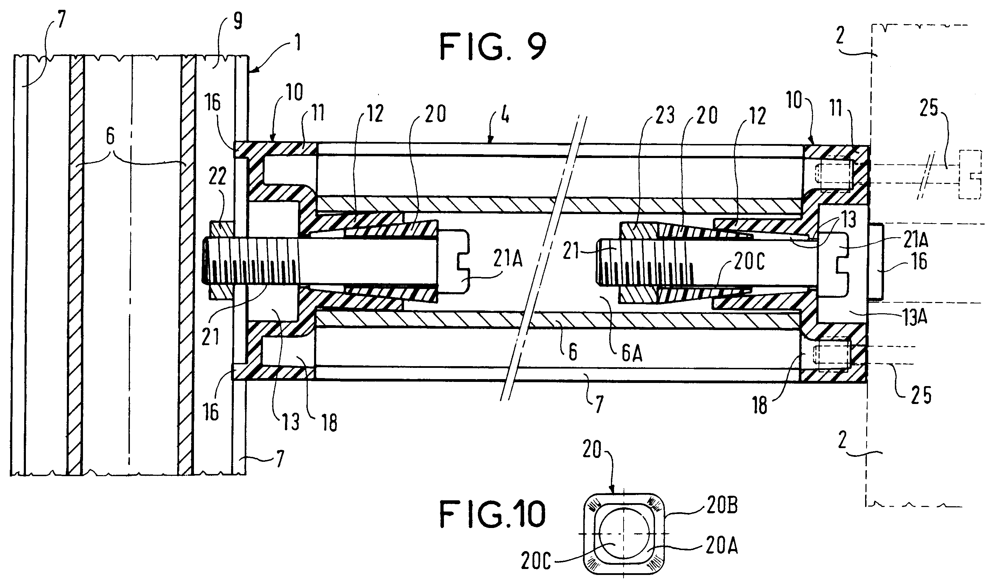

Les trous 17 dans l'embase sont précisés en regard des figures 8 et 9. Chacun est divisé en trois parties 17A, 17B et 17C à la suite. La partie terminale 17A sur la face de centrage de l'embase et la partie intermédiaire 17B sont de section circulaire. La partie terminale 17C sur la face principale portant l'embout est de section carrée. Le diamètre de la partie terminale 17A est légèrement inférieur à celui de la partie intermédiaire, lui même légèrement inférieur au côté de la partie 17C.

Ainsi que représenté dans la figure 8, considérée relativement à la figure 7, un insert métallique 19, tubulaire et fileté intérieurement, est monté dans chaque trou 17, pour renforcer la résistance d'une fixation réalisée par des vis bloquées dans ces trous 17 ainsi équipés. Cet insert introduit par la partie 17C a son extrémité avant venant en butée contre l'épaulement annulaire 17D défini entre les parties 17A et 17B. Il présente pour son propre blocage dans le trou, un épaulement arrière 19A, venant en butée contre l'épaulement annulaire 17E défini entre les parties 17B et 17C, et une dent annulaire périphérie 19B ancrée dans le bord de la partie intermédiaire 17B.

La figure 9 montre l'une des potences 4 fixée à l'un des profilés 1 et équipée pour pouvoir y fixer en bout un bloc de raccordement. Ces deux fixations sont assurées par deux modules de fixation 10, à chacun desquels sont associés une contre pièce de blocage 20, une vis de serrage 21 à tête 21A et un écrou 22 ou 23.

La contre pièce de blocage 20 est reçue partiellement dans l'embout 12 du module de fixation. Elle est de forme conique extérieurement. Sa section droite est carrée sensiblement à coins arrondis ainsi qu'il ressort de la figure 10. Sa petite base 20A est de côté plus petit que celui de la section droite de l'alésage 13 de l'embout et sa grande base 20B de côté plus grand et au moins égal à celui de la section droite de l'embout. Elle présente un trou axial 20C de section droite circulaire, qui correspond à celle de la partie circulaire de l'alésage 13 à la jonction de l'embase et de l'embout.

L'écrou 22 est rhomboïdal. Il est relativement plat et a ses deux faces frontales en forme de parallélogramme, sensiblement. Ses dimensions sont telles qu'il s'engage dans l'un des logements 9 du profilé 1 directement à travers l'ouverture 9A et se bloque dans ce logement par rotation d'un quart de trou.

L'écrou 23 est de section carrée non tronquée, qui correspond sensiblement à la section interne des potences, dans laquelle il est enfilé et se bloque en rotation.

La fixation de la potence 4 sur le profilé 1 se fait en insérant tout d'abord la contre pièce de blocage 20 dans l'embout 12 puis la vis 21 dans le trou 20C et la partie de l'alésage 13 prolongeant le trou 20C dans l'embase 11, jusqu'à butée de la tête 21A contre la grande base 20B de la contre pièce de blocage 20. L'écrou rhomboïdal 22 est alors vissé sans serrage sur l'extrémité de la vis. Le module de fixation 10 ainsi équipé est enfilé dans l'une des deux extrémités de la potence 4, avec la tête 21A de la vis 21 et l'embout venant se loger dans la section interne de la potence, jusqu'à butée de l'embase contre le bout de la potence. L'écrou 22 est lui même engagé dans le logement 9 de la face avant du profilé, tout en maintenant l'embase 12 du module de fixation contre le bout de la potence et en engageant les pattes de centrage 16 dans l'ouverture 9A du logement. On serre alors, à l'aide d'un tournevis, depuis l'autre extrémité de la potence 4, la vis sur l'écrou 22, ce qui donne lieu tout d'abord à la rotation quart de tour de l'écrou pour son blocage en rotation, puis à l'avance de la contre pièce de blocage dans l'embout et à la déformation des ailettes élastiques 15 de l'embout jusqu'à obtenir le blocage résultant de l'embout 12 et donc du module de fixation 10 dans la potence et sur le profilé.

Le montage du module de fixation 10 sur l'autre extrémité libre de la potence se fait de manière comparable, mais cette fois en enfilant l'écrou carré 23, monté sur la vis 21 du module équipé, dans la section interne de la potence 4. On serre alors la vis 21 en actionnant sa tête 21A, qui est cette fois accessible sur le bout de la potence, pour l'avance de la contre-pièce 20 dans l'embout et le blocage résultant de ce module de fixation sur la potence.

L'embase de ce dernier module de fixation 10 bouche l'extrémité avant de la potence. Deux modules de fixation 10, fixés sur le bout avant de deux potences successives sur l'un des profilés 1, permettent de venir fixer un des blocs de raccordement 2 entre eux. Cette fixation est assurée par des vis 25 insérées dans deux des quatre trous 17 de l'embase de chacun de ces deux modules de fixation. Ces deux modules de fixation sont alors en butée contre les deux pattes de centrage 16 du module de fixation qui leur est commun.

La figure 11 montre la fixation de deux anneaux de guidage horizontaux 3A sur l'un des profilés 1.

La fixation de chacun de ces deux anneaux de guidage 3A est assurée par l'un des modules de fixation 10 auquel sont associés une vis de serrage et un écrou rhomboïdal, désignés par leurs références respectives précédentes 21 et 22, mais pas la contre-pièce de blocage rendue non nécessaire.

Pour cette fixation, ainsi que visible plus particulièrement sur l'anneau de guidage 3A de droite, non monté en place, chaque anneau de guidage est pourvu d'un doigt latéral de montage 30, qui est saillant sur l'arrière de l'anneau de guidage, et ce doigt comporte un logement 34 qui permet d'enfiler le doigt sur l'embout 12 du module de fixation et la vis de serrage 21 dans l'alésage de l'embout.

Le doigt 30 étant enfilé sur l'embout et la vis dans l'alésage 13 avec sa tête 21A en butée contre le doigt, on monte l'écrou rhomboïdal 22 sur le bout de la vis. On insère alors l'écrou dans le logement 9 de l'une des deux faces latérales du profilé 1 et les pattes de centrage 16 dans l'ouverture de ce logement, tout en maintenant le doigt 30 sur l'embout et donc l'anneau sur le module de fixation. On serre ensuite la vis sur l'écrou 22, bloqué dès sa rotation d'un quart de trou dans son logement, par action sur la tête 21A située sur le côté extérieur.

Le montage des deux anneaux de guidage 3A, horizontalement, sur l'une et l'autre des deux faces latérales du profilé 1, est rendu possible par des dispositions prévues sur chaque anneau de guidage 3A et plus précisément sur son doigt 30.

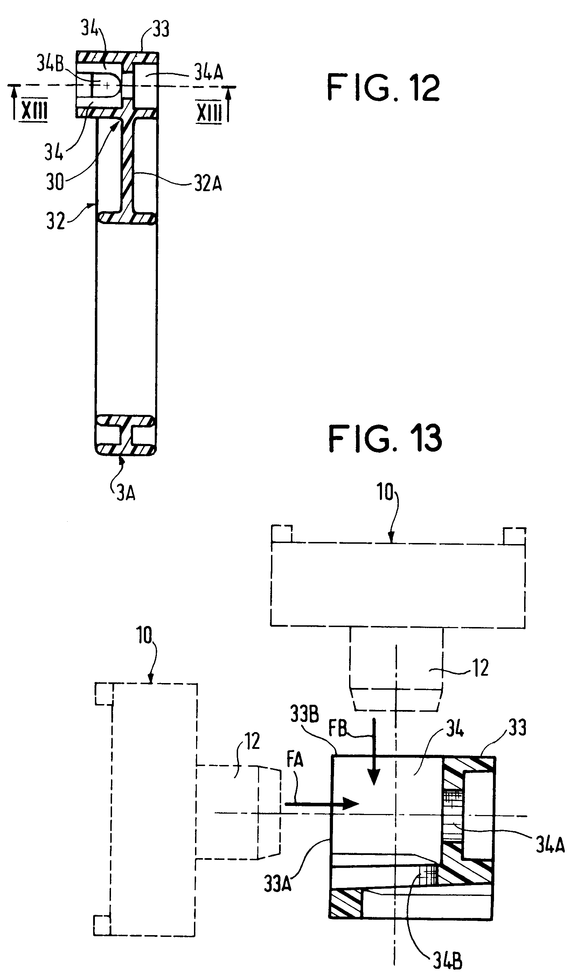

L'anneau de guidage 3A et son doigt 30 sont décrits en détail en se référant à cette figure 11 et aux figures 12 et 13.

L'anneau de guidage 3A est de forme rectangulaire, à coins arrondis et d'épaisseur suffisante pour sa résistance. Il est en plastique et réalisé par moulage.

Le doigt 30 est formé sensiblement à la jonction entre le grand bord dit arrière, pour les conditions de montage et d'utilisation de l'anneau de guidage 3A, et l'un des deux autres bords dits latéraux. Il est saillant sur l'arrière de l'anneau en étant perpendiculaire à ce bord longitudinal arrière, à l'une des extrémités de celui-ci sensiblement.

Les bords de l'anneau sont de section droite en I, pour une rigidité de l'anneau, le jambage central du I étant dans le plan médian de symétrie de l'anneau.

Le bord avant opposé à celui portant le doigt 30 présente une ouverture 31, d'entrée et de sortie des jarretières. Cette ouverture n'est pas centrée sur le bord avant mais très légèrement décalée vers l'extrémité de ce bord qui est diagonalement opposée au point de départ du doigt sur le bord arrière. Elle est en biais, avec son extrémité extérieure sur l'anneau plus proche du centre du bord avant que son extrémité intérieure. Elle est limitée de part et d'autre par deux facettes en biais 31A, 31B, pleines et parallèles, la facette 31A la plus proche du centre du bord avant étant plus longue que l'autre et légèrement saillante dans l'anneau, en formant un bec 31C s'opposant à la sortie naturelle des jarretières de l'anneau de guidage.

Le doigt 30 est divisé en une patte 32, d'attache au bord arrière, et en une partie terminale 33, de montage sur le module de fixation.

La patte 32 est de même épaisseur que l'anneau de guidage. Elle est également de section en I, dont le jambage médian 32A est dans le plan médian de symétrie de l'anneau, et les jambages 32B et 32C sont perpendiculaires au bord arrière de l'anneau, le jambage 32B partant de l'extrémité de ce bord arrière et étant dit jambage latéral extérieur de la patte, l'autre jambage 32C étant dit jambage latéral intérieur, par opposition au précédent.

La partie terminale 33 a une forme de pavé parallélépipédique et est ainsi appelée. Ce pavé est évidé pour définir le logement 34, sensiblement cubique, de côté correspondant à celui de la section droite de l'embout 12 du module de fixation 10. Il reçoit l'embout 12 selon deux directions orthogonales possibles FA et FB ainsi qu'illustré dans la figure 13. Le logement est à cet effet totalement ouvert sur deux faces adjacentes du pavé, autres que celle frontale du pavé et celle opposée de jonction avec la patte 32. L'une des faces totalement ouverte 33B est celle dite latérale extérieure du pavé, qui est coplanaire avec le jambage latéral extérieur de la patte. L'autre 33A est l'une des faces parallèles au plan médian de l'anneau de guidage. Ce logement 33 est en outre ouvert sur les faces opposées aux faces 33B et 33A, pour le passage de la vis de serrage précitée dans l'alésage de l'embout du module de fixation, quand cet embout est enfilé dans le logement 34 avec l'une de ses deux directions possibles FB et FA par l'une des faces 33B et 33A. Il présente à cet effet une ouverture 34A opposée à la face totalement ouverte 33A et une ouverture 34B opposée à la face totalement ouverte 33B.

En se référant à la figure 11, on précise que ce logement 34 et les dispositions prévues, pour enfiler selon deux directions possibles l'embout 12 dans le logement et la vis de blocage dans l'embout et le pavé, permettent de monter les anneaux horizontaux de guidage 3A sur l'une et l'autre des deux faces latérales du profilé 1. Les jarretières guidées dans deux séries d'anneaux le long et de part et d'autre de ce profilé peuvent desservir la série de blocs de raccordement sur ce même profilé et au moins l'une des deux séries adjacentes de blocs de raccordement montés sur les deux profilés de part et d'autre de celui considéré.

Les figures 2 et 3 montrent également un anneau de guidage 3B vertical, monté sur l'un des profilés 2. Cet anneau de guidage 3B est monté au bas de ce profilé pour définir avec d'autres anneaux verticaux montés de la même manière sur d'autres profilés un chemin de guidage horizontal au niveau inférieur du répartiteur.

Cet anneau de guidage 3B est identique aux anneaux de guidage 3A et est fixé de manière analogue à ces derniers sur le profilé par l'un des modules de fixation 10, auquel sont associés la vis de serrage et l'écrou rhomboïdal précités. Il est illustré fixé sur la face avant du profilé, le petit bord de l'anneau 3B proche du doigt 30 devenant alors le bord arrière situé en regard de la face avant du profilé. Dans ces conditions de montage de l'anneau 3B sur la face avant du profilé, l'axe médian de l'anneau 3B est plus à l'avant du profilé que les axes médians des anneaux 3A.

En variante l'anneau de guidage 3B peut être fixé sur l'une des deux faces latérales du profilé au bas celui-ci. Dans ces conditions le chemin horizontal défini par les anneaux 3B n'est pas décalé à l'avant des profilés, par rapport aux chemins verticaux, mais simplement en dessous de ces chemins verticaux.

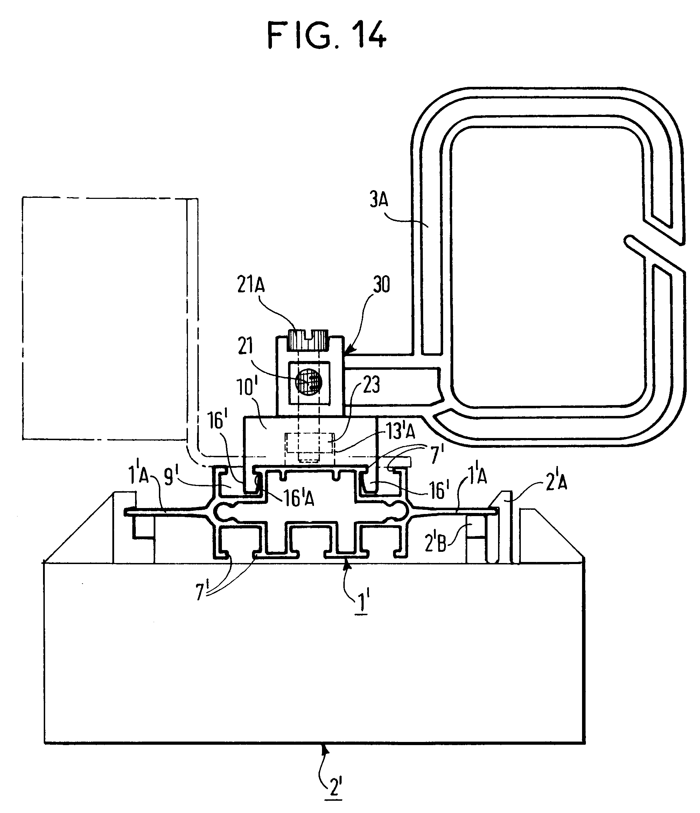

La figure 14 montre que le répartiteur peut être constitué en adoptant un autre type de profilés dits profilés linéaires tels que le profilé représenté et désigné sous la référence 1'. Ce profilé 1', déjà utilisé pour la constitution de répartiteur, est à plusieurs paires d'ailettes 7' sur sa face avant et sa face arrière, les ailettes de chaque paire définissant entre elles un logement 9', et à deux branches 1'A saillantes latéralement, de part et d'autre, pour l'accrochage entre elles de chaque bloc de raccordement 2'.

Les paires d'ailettes de la face avant servent de butée pour chaque bloc de raccordement 2', équipé de pattes élastiques d'encliquetage 2'A et de pattes rigides de butée 2'B, sur sa face arrière de montage, pour son accrochage sur les branches 1'A.

Ce profilé 1' permet la fixation traditionnelle d'une goulotte de guidage des lignes des câbles sur sa face arrière, telle que la goulotte illustrée en pointillés mais non référencée, qui est fixée sur un support en L, lui-même vissé aux paires d'ailettes de la face arrière du profilé.

Ce même profilé permet également la fixation des anneaux de guidage de jarretières, tel que du seul anneau horizontal de guidage représenté en trait plein. Cet anneau horizontal est identique aux anneaux 3A et désigné par cette référence. Il est fixé sur le profilé 1' par un module de fixation 10'. Ce module de fixation 10' est analogue au module de fixation précédent 10 des figures 3 à 8, à quelques différences près qui sont seules précisées.

Les pattes de centrage 16' de ce module de fixation ont chacune une dent d'encliquetage 16'A, les deux dents étant en vis-à-vis et reçues dans les deux logements 9' de la face arrière du profilé 1' et s'accrochant sous les deux ailettes les plus intérieures de la face arrière.

Ce module de fixation 10' a son embout engagé dans la partie centrale du doigt 30 de l'anneau de guidage 3A. L'anneau 3A est bloqué sur le module de fixation 10', avant l'encliquetage de ce module sur la face arrière du profilé. Ce bloquage est assuré par une vis de serrage 21 et un écrou 23, carré ou rectangle, cet écrou étant bloqué, en rotation dans l'ouverture 13'A de la face principale de centrage de l'embase de ce module portant les pattes 16'.

Cet anneau de guidage 3A arrière sur le profilé 1' est décalé latéralement sur celui-ci, pour rendre les jarretières, qu'il retient, accessibles depuis l'avant du répartiteur.

Bien que non représenté sur cette figure 14, on indique que les anneaux horizontaux de guidage tels que 3A peuvent être alternativement s'étendre d'un côté et de l'autre de ce profilé 1', pour définir deux chemins verticaux le long et de part et d'autre du même profilé 1'. On indique également que des anneaux verticaux de guidage peuvent être montés au bas et/ou au haut du répartiteur, sur la face arrière de certains des profilés, pour définir un chemin horizontal inférieur et/ou supérieur pour les jarretières, dans le répartiteur.

## Revendications

**1)** Répartiteur téléphonique, comportant des profilés porteurs, alignés à la suite les uns des autres, des équipements de raccordement, dits blocs de raccordement, reliés à des lignes de câbles d'entrée et de sortie et à des jarretières, et des équipements accessoires, constitués pour au moins une partie d'entre eux par des anneaux de guidage des jarretières, et dans lequel lesdits profilés présentent des ailettes longitudinales de montage des équipements, lesdits blocs de raccordement forment des rangées parallèles aux profilés au moins sur une face avant du répartiteur et laissent au moins un accès latéral le long de chaque rangée, et lesdits anneaux de guidage maintenus sur lesdits profilés par des éléments individuels de fixation sont en regard des accès latéraux définis le long desdites rangées, caractérisé en ce que lesdits éléments de fixation sont des modules identiques (10, 10') et comportent chacun une embase plate (11), ayant deux faces principales, un embout (12), saillant sur une première des faces principales de l'embase, un alésage axial (13), traversant l'embase et l'embout et recevant une vis (21) de serrage dans un écrou terminal associé (22, 23), bloqué en rotation, et une paire de pattes (16, 16') saillantes sur la deuxième face principale de l'embase, pour le montage du module de fixation entre des ailettes des profilés (1, 1'), et en ce que lesdits anneaux de guidage (3A, 3B) comportent chacun un doigt latéral (30), pourvu d'un logement interne (34) complémentaire de l'embout et débouchant sur l'extérieur du doigt d'une part par deux premières ouvertures orthogonales (33A, 33B), d'insertion de l'embout dans ledit logement selon deux directions orthogonales(FA, FB), et d'autre part par deux deuxièmes ouvertures (34A,34B) opposées auxdites premières ouvertures, de passage de ladite vis pour son serrage dans ledit écrou.

**2)** Répartiteur selon la revendication 1, caractérisé en ce que ledit embout (12) est de section droite sensiblement carrée et ledit logement (34) de section analogue dans deux plans parallèles auxdites premières ouvertures, respectivement.

**3)** Répartiteur selon la revendication 2, caractérisé en ce que lesdits anneaux de guidage (3A, 3B) sont identiques, de forme sensiblement rectangulaire et d'épaisseur suffisante pour leur résistance, ledit doigt latéral (30) de chacun étant porté par un premier bord de l'anneau de guidage et étant sensiblement dans le prolongement d'un deuxième bord adjacent audit premier bord, et lesdites ouvertures dudit logement (34) étant dans deux plans parallèles à la face extérieure dudit deuxième bord et dans deux plans parallèles au plan médian de l'anneau de guidage.

**4)** Répartiteur selon la revendication 3, caractérisé en ce que chaque anneau de guidage (3A, 3B) comporte une entrée/sortie (31) des jarretières, sur un troisième de ses bords, opposé audit premier bord, ladite entrée/sortie (31) étant sensiblement décalée, relativement à la partie médiane dudit troisième bord, vers celle des ses extrémités diagonalement opposée au doigt latéral (30) sur ledit premier bord.

**5)** Répartiteur selon la revendication 4, caractérisé en ce que ladite entrée/sortie (31) est en biais à travers le troisième bord et limitée de part et d'autre par deux facettes (31A, 31B) définies à travers ledit troisième bord, la facette (31A) la plus proche de la partie médiane du troisième bord formant en outre un bec terminal (31C) saillant dans l'anneau de guidage.

**6)** Répartiteur selon l'une des revendications 3 à 5, caractérisé en ce que les bords de chaque anneau de guidage (3A, 3B) et le doigt latéral (30) sont de section droite en I, les jambages médians des sections en I des bords et du doigt étant coplanaires et définissant le plan médian de l'anneau de guidage, le jambage médian du I de section du doigt étant tronqué dans la partie terminale (33) présentant ledit logement (34), ladite partie terminale (33) formant un pavé terminal évidé, de montage de l'anneau de guidage sur l'embout du module de fixation.

**7)** Répartiteur selon l'une des revendications 3 à 6, caractérisé en ce que chaque anneau de guidage (3A, 3B), pourvu dudit doigt latéral (30), est en plastique.

**8)** Répartiteur selon l'une des revendications 2 à 7, caractérisé en ce que ledit alésage (13) de chaque module de fixation débouche dans un évidemment (13A) de la deuxième face principale de l'embase, ledit évidement étant de section sensiblement rectangulaire, supérieure à la section dudit alésage au niveau de la première face principale de ladite embase, et recevant sélectivement la tête de ladite vis, en la laissant libre en rotation, ou ledit écrou, en le bloquant en rotation.

**9)** Répartiteur selon la revendication 8, caractérisé en ce que lesdits profilés (1) sont des profilés creux, présentant une section interne continue et une section externe discontinue, toutes deux carrées et reliées l'une à l'autre, ayant chacune de leurs faces dites avant, arrière et latérales, définie par la section externe et formée par une paire desdites ailettes longitudinales (7), et comportant quatre logements périphériques (9) délimités entre les sections interne et externe reliées l'une à l'autre et ouverts sur l'axe longitudinal de chaque face des profilés, en ce que lesdites pattes (16) saillantes sur l'embase des modules de fixation (10) sont des pattes droites de guidage, reçues entre les ailettes de l'une des faces de l'un des profilés, le logement périphérique (9) ouvert sur cette même face du profilé recevant ledit écrou (22) associé à ladite vis de serrage et choisi de forme rhomboïdale, pour son insertion dans le logement périphérique et son blocage en rotation, par une rotation quart de tour.

**10)** Répartiteur selon la revendication 9, caractérisé en ce qu'au moins une partie desdits anneaux de guidage (3A) sont montés horizontalement relativement aux profilés (1), dits profilés verticaux, et sont retenus chacun par l'un desdits modules de fixation (10) sur l'une et l'autre des faces latérales d'une seule partie des profilés (1) pour définir deux chemins verticaux de jarretières de part et d'autre de chacun des profilés de cette partie.

**11)** Répartiteur selon la revendication 10, caractérisé en ce que les anneaux de guidage (3B) de l'autre partie sont montés verticalement sur les profilés et sont retenus par l'un desdits modules de fixation (10) sur l'une des faces latérales et avant de certains d'entre eux, pour définir au moins un chemin horizontal de jarretières.

**12)** Répartiteur selon l'une des revendications 9 à 11, caractérisé en ce que ledit embout (12) des modules de fixation (10) présente quatre fentes (14) aux quatre coins de sa section carrée, divisant l'embout et le rendant élastiquement déformable, et des chanfreins (15B), (15A) sur les extrémités et les faces intérieures de l'embout ainsi divisé.

**13)** Répartiteur selon la revendication 12, dans lequel lesdits blocs de raccordement sont montés sur lesdits profilés par des potences, chacune fixée sur lesdits profilés par des premiers moyens de fixation et recevant l'un desdits blocs de raccordement, lui-même fixé en bout de la potence par des deuxièmes moyens individuels de fixation, caractérisé en ce que lesdites potences (4) sont des tronçons identiques auxdits profilés (1) et en ce que lesdits premiers et deuxièmes moyens de fixation sont constitués par lesdits modules de fixation (10), à chacun desquels est en outre associé une contre-pièce de blocage (20), alésée intérieurement, et présentant une forme conique à section carrée extérieurement, qui est engagée partiellement dans l'embout, ledit embout ainsi équipé de ladite contre-pièce de blocage étant enfilé dans la section interne de la potence et bloqué dans la potence par serrage de la vis sur ledit écrou, ledit écrou étant choisi rhomboïdal et étant préalablement au serrage de la vis inséré dans le logement périphérique (9) de la face avant du profilé, pour la fixation de la potence au profilé, et ledit écrou étant choisi de section carrée et étant préalablement au serrage de la vis inséré dans la section interne du profilé, pour la fixation du module de fixation en bout de la potence et le maintien sur ce module de fixation de l'un des blocs de raccordement.

**14)** Répartiteur selon la revendication 13, caractérisé en ce que lesdits modules de fixation (10) comportent en outre des trous (17) traversant de part et d'autre ladite embase (11), affectés à la fixation à l'aide de vis de l'un des blocs de raccordement contre la deuxième face principale de l'embase.

**15)** Répartiteur selon la revendication 12, caractérisé en ce que lesdits trous (17) sont équipés chacun d'un insert métallique (19) taraudé et bloqué dans le trou.

**16)** Répartiteur selon la revendication 8, dans lequel les profilés sont des profilés porteurs dits linéaires, présentant des paires d'ailettes longitudinales sur une face avant et sur une face arrière de chacun d'eux et des logements avant et arrière (9') entre les ailettes de chaque paire, caractérisé en ce que lesdites pattes (16') saillantes sur l'embase desdits modules de fixation (10') sont pattes élastiques ayant une dent d'encliquetage (16'A), les pattes étant reçues dans deux logements arrière et bloquées contre l'une des ailettes longitudinales correspondant à chacun de deux logements arrière.

**17)** Répartiteur selon la revendication 16, caractérisé en ce que lesdits anneaux de guidage (3A, 3B) sont fixés sur lesdits modules de fixation (10'), par serrage de ladite vis (21') sur ledit terminal écrou associé (23), bloqué dans ledit évidement (13A) de la face principale de l'embase du module de fixation, et les modules de fixation portant les anneaux de guidage sont encliquetés sur la face arrière des profilés (1'), dits verticaux, avec une orientation horizontale au moins pour certains et une orientation verticale possible pour d'autres, les blocs de raccordement étant tous montés sur la face avant desdits profilés.
